# DEMANDE DE BREVET EUROPEEN

(11) **EP 4 768 219 A1**
(43) Date de publication de la demande: **01.07.2026**
(21) Numéro de dépôt: 25227824.7
(22) Date de dépôt: 31.12.2025
(51) Int. Cl.: B29C 45/14, F17C 1/16

(54) **FABRICATION D'UN RÉSERVOIR PAR SURMOULAGE D'UN INSERT COMPOSITE**

(30) Priorité: 31.12.2024 FR 2415438
(71) Demandeur: Faurecia Hydrogen Solutions France, 92000 Nanterre (FR)
(72) Inventeur: ROBERT, Pierre-Alexandre, 25550 BAVANS (FR); OTTAVIANI, Eric, 25550 BAVANS (FR); RICHARD, Gaëtan, 25550 BAVANS (FR); BAVEREL, Christophe, 25550 BAVANS (FR); FERRIER, Thomas, 25550 BAVANS (FR)
(74) Mandataire: Lavoix

(57) **Abrégé**

L'invention concerne un procédé de fabrication d'un réservoir pour gaz sous pression comprenant les étapes suivantes :
- production d'un insert (1) en composite comprenant une armature en fibres noyée dans une matrice thermodurcissable,
- mise en place dudit insert (1) dans un moule,
- surmoulage, sur au moins une partie de la surface de l'insert (1) avec un polymère de surmoulage (2),
- refroidissement/durcissement,
comprenant encore, entre l'étape de production et l'étape de surmoulage, une étape de :
- dépôt d'un polymère de collage, sur au moins une partie de la surface de l'insert (1).

## Description

### Domaine technique

L'invention concerne un procédé de fabrication d'un réservoir par surmoulage d'un insert composite et un tel réservoir.

### Technique antérieure

Il est connu de fabriquer un réservoir ou une pièce de réservoir par surmoulage d'un insert composite.

Un tel procédé comprend les étapes suivantes. Au cours d'une première étape, un insert en composite est produit. Cet insert comprend classiquement une armature en fibres, noyée dans une matrice thermodurcissable. Une fois produit, cet insert est mis en place dans un moule. Ledit moule est apte à recevoir une injection d'un polymère de surmoulage. Au cours d'une étape de surmoulage, le polymère de surmoulage est injecté dans le moule, au moins partiellement, autour de l'insert. L'ensemble est ensuite refroidi afin d'en réaliser le durcissement du polymère de surmoulage et obtenir la pièce de réservoir.

Du fait des matériaux différents utilisés, entre le polymère de surmoulage et le matériau composite de l'insert, au cours du refroidissement, il peut apparaître un retrait différentiel entre l'insert et le surmoulage. Ce retrait différentiel, peut laisser apparaître un écart entre insert et surmoulage, causant un manque de matière et une absence d'adhérence entre insert et surmoulage.

Aussi, il est recherché un moyen de fabrication corrigeant cet inconvénient, afin de ne pas laisser apparaître un tel écart et de garantir une adhérence entre insert et surmoulage.

### Résumé de l'invention

L'invention se propose de corriger ces inconvénients en empêchant la formation d'écarts causés par les retraits différentiels.

Pour cela, l'invention a pour objet un procédé de fabrication d'un réservoir pour gaz sous pression, tel de l'hydrogène, comprenant les étapes suivantes :
- production d'un insert en composite comprenant une armature en fibres noyée dans une matrice thermodurcissable,
- mise en place dudit insert dans un moule,
- surmoulage, sur au moins une partie de la surface de l'insert avec un polymère de surmoulage,
- refroidissement/durcissement,
et comprenant encore, entre l'étape de production et l'étape de surmoulage, une étape de :
- dépôt d'un polymère de collage, sur au moins une partie de la surface de l'insert.

Des caractéristiques ou des modes de réalisation particuliers, utilisables seuls ou en combinaison, sont :
- le dépôt du polymère de collage est réalisé par poudrage, sur l'insert préalablement chauffé,
- le procédé comprend encore, entre l'étape de dépôt et l'étape de surmoulage, une étape de refroidissement/durcissement du polymère de collage,
- le polymère de collage est déposé préférentiellement dans au moins une zone de retrait différentiel,
- ladite au moins une zone de retrait différentiel, la quantité et la répartition de polymère de collage sont déterminées par analyse de la forme de la pièce/moule ou par analyse d'une pièce perdue fabriquée sans polymère de collage,
- le polymère de collage est déposé dans les zones concaves de l'insert,
- le polymère de collage est un polymère à base de polyéthylène,
- le polymère de surmoulage est un polymère thermoplastique,
- l'armature en fibres comprend des fibres de verre ou de carbone et la matrice thermodurcissable est une résine époxy.

Selon un autre aspect, un réservoir pour gaz sous pression, tel de l'hydrogène, réalisé par un tel procédé.

Selon un autre aspect, un réservoir pour gaz sous pression, tel de l'hydrogène, comprenant un insert en composite, comprenant une armature en fibres noyée dans une matrice thermodurcissable, et un surmoulage couvrant au moins une partie de la surface de l'insert par un polymère de surmoulage, où au moins une partie de la surface de l'insert comporte un dépôt d'un polymère de collage.

### Brève description des dessins

L'invention sera mieux comprise à la lecture de la description qui suit, faite uniquement à titre d'exemple, et en référence aux figures en annexe dans lesquelles :

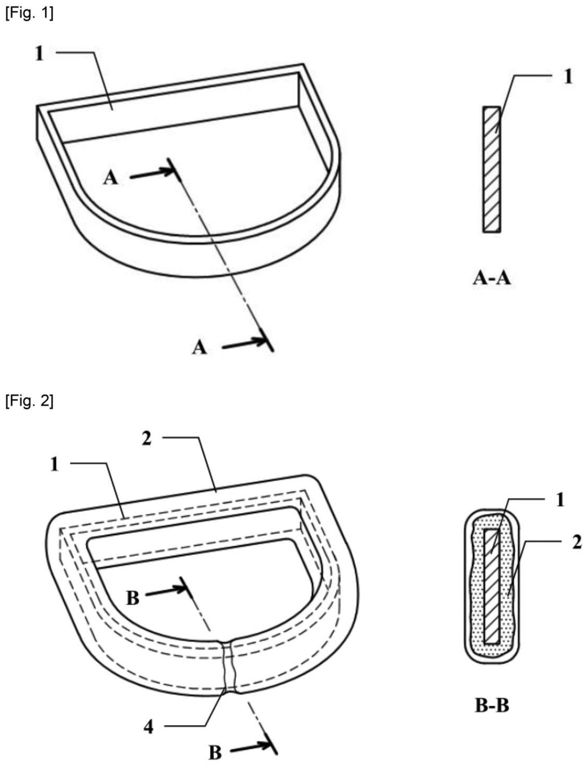

[Fig. 1] montre, en vue perspective, un insert pour réservoir de gaz,
[Fig. 2] montre, en vue perspective, un insert surmoulé selon l'art antérieur,

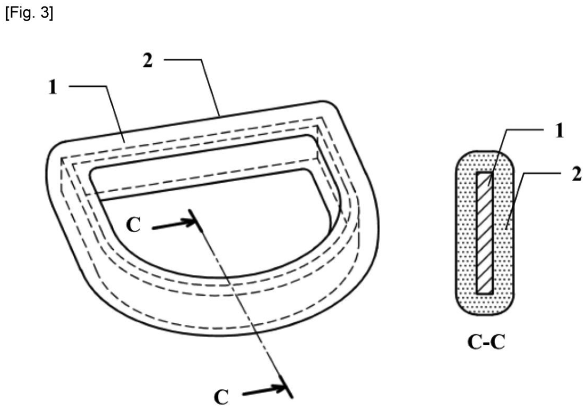

[Fig. 3] montre, en vue perspective, un insert surmoulé selon l'invention.

### Description des modes de réalisation

L'invention concerne un procédé de fabrication d'un réservoir pour gaz sous pression, tel de l'hydrogène. Ce procédé comprend les étapes suivantes, précédemment décrites.

Au cours d'une première étape, un insert 1 en composite est produit. Cet insert 1 comprend classiquement une armature en fibres, noyée dans une matrice thermodurcissable. Une fois produit, cet insert 1 est mis en place dans un moule. Ledit moule est apte à recevoir une injection d'un polymère de surmoulage 2. Au cours d'une étape de surmoulage, un polymère de surmoulage 2 est injecté dans le moule, en contact avec au moins une partie de la surface de l'insert 1. Au cours d'une dernière étape, l'ensemble est ensuite refroidi afin d'en réaliser le durcissement et obtenir la pièce, partie d'un réservoir.

Selon une caractéristique, le procédé comprend encore une étape de dépôt d'un polymère de collage. Ce dépôt est réalisé en contact avec au moins une partie de la surface de l'insert 1. Cette étape prend place, entre l'étape de production et l'étape de surmoulage. Cette étape peut être réalisée avant ou après la mise en place de l'insert 1 dans le moule.

L'objectif de ce dépôt de polymère de collage est double. Un premier objectif du polymère de collage est d'assurer le collage du polymère de surmoulage 2 avec l'insert 1 composite. Un deuxième objectif du polymère de collage est de fournir un matériau intermédiaire pour compenser le manque de matière occasionné par le retrait différentiel.

Selon une autre caractéristique, le dépôt du polymère de collage est réalisé par poudrage à chaud. Aussi, le polymère de collage est présenté sous forme d'une poudre. Cette poudre est saupoudrée sur au moins une partie de la surface de l'insert 1. Afin de chauffer ladite poudre, l'insert 1 est préalablement chauffé.

Selon une autre caractéristique, le procédé comprend encore une étape de refroidissement. Cette étape de refroidissement permet au polymère de collage de durcir. Cette étape est disposée entre l'étape de dépôt, où est introduit le polymère de collage, et l'étape de surmoulage, où est injecté le polymère de surmoulage 2.

Le polymère de collage peut ainsi être refroidi avant le surmoulage. Le surmoulage, qui injecte un polymère de surmoulage 2 chaud, conduit à un nouveau ramollissement du polymère de collage. Ce ramollissement contribue à améliorer l'adhérence du polymère de surmoulage 2 avec le polymère de collage et donc avec l'insert 1 composite dont le polymère de collage est solidaire.

Afin de mieux résoudre le problème de retrait différentiel, selon une autre caractéristique, le polymère de collage est déposé, prioritairement dans au moins une zone de retrait différentiel 4. Ainsi, la matière apportée par le polymère de collage est disposée là où l'adhérence est la plus nécessaire et là où le manque de matière est le plus présent, afin de le combler.

Selon une autre caractéristique, la détermination de ladite au moins une zone de retrait différentiel 4 s'effectue par analyse de la forme de la pièce, ou ce qui est équivalent par analyse de la forme du moule.

L'homme du métier sait prédire en analysant cette forme, le lieu et les dimensions du retrait qui va se produire. Ainsi, il est prévisible de trouver une zone de retrait différentiel 4 dans les zones incurvées aux extrémités. De même la/les face(s) interne(s), soit les zones concaves de l'insert 1 sont candidates. Les dimensions des retraits différentiels permettent aussi de déterminer la quantité et la répartition de polymère de collage nécessaires pour compenser lesdits retraits différentiels.

Alternativement ou complémentairement, cette détermination peut être réalisée de manière empirique, en fabriquant une pièce sans utiliser de polymère de collage, soit selon l'art antérieur. Cette fabrication produit une pièce perdue présentant une ou plusieurs zones de retrait différentiel 4. L'analyse de ces zones de retrait différentiel 4 indique les positions et les dimensions du ou des zones de retrait différentiel 4 et permet par conséquent de déterminer les quantités et les répartitions de polymère de collage nécessaires à les compenser.

De manière générale, des zones de retrait différentiel 4 apparaissent principalement dans les parties concaves de l'insert 1.

La mise au point exacte des quantités et localisations des dépôts de polymère de collage peut nécessiter des essais et erreurs.

Selon une autre caractéristique, le polymère de collage est un polymère à base de polyéthylène. Cette matière présente des caractéristiques d'adhérence permettant de réaliser une adhésion entre l'insert 1 et le polymère de surmoulage 2. Cette matière permet encore de présenter des caractéristiques d'élongation compatible des tensions apparaissant au lieu des potentiels retraits différentiels, afin de n'en pas produire.

Selon une autre caractéristique, la matière du polymère de surmoulage 2 reste celle commandée par les besoins de la pièce. Aussi, il peut s'agir d'un polyamide, tel un PA 6, un PA 11 ou un PA 12. Alternativement, il peut encore s'agir d'un polyéthylène, qui présente ainsi avantageusement une meilleure cohésion avec le polymère de collage. Alternativement encore, il peut s'agir d'autres polymères thermoplastiques.

Selon une autre caractéristique, l'insert 1 est en composite. L'armature de ce composite est réalisée en fibres. Ces fibres peuvent être des fibres de verre ou de carbone, et préférentiellement de carbone. Cette armature est noyée dans une matrice thermodurcissable. Cette matrice thermodurcissable est avantageusement en résine époxy. D'autres matières thermodurcissables peuvent être employées.

L'invention concerne encore un réservoir ou une pièce de réservoir réalisée par le procédé tel que précédemment décrit.

L'invention concerne encore un réservoir comprenant un insert 1 en composite et un surmoulage. L'insert 1 comprend une armature en fibres noyée dans une matrice thermodurcissable. Le surmoulage couvre au moins une partie de la surface de l'insert par un polymère de surmoulage 2. Selon une caractéristique, au moins une partie de la surface de l'insert 1 est recouverte d'un dépôt d'un polymère de collage.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

### Liste des signes de référence

1 : insert,
2 : polymère de surmoulage,
4 : zone de retrait différentiel.

## Revendications

1. Procédé de fabrication d'un réservoir pour gaz sous pression, tel de l'hydrogène, comprenant les étapes suivantes :
- production d'un insert (1) en composite comprenant une armature en fibres noyée dans une matrice thermodurcissable,
- mise en place dudit insert (1) dans un moule,
- surmoulage, sur au moins une partie de la surface de l'insert avec un polymère de surmoulage (2),
- refroidissement et durcissement,
***caractérisé en* ce *qu'il*** comprend encore, entre l'étape de production et l'étape de surmoulage, une étape de :
- dépôt d'un polymère de collage, sur au moins une partie de la surface de l'insert (1).

2. Procédé selon la revendication 1, où le dépôt du polymère de collage est réalisé par poudrage, sur l'insert (1) préalablement chauffé.

3. Procédé selon l'une quelconque des revendications 1 ou 2, comprenant encore, entre l'étape de dépôt et l'étape de surmoulage, une étape de refroidissement et durcissement du polymère de collage.

4. Procédé selon l'une quelconque des revendications 1 à 3, où le polymère de collage est déposé préférentiellement dans au moins une zone de retrait différentiel (4).

5. Procédé selon la revendication 4, où ladite au moins une zone de retrait différentiel (4), la quantité et la répartition de polymère de collage sont déterminées par analyse de la forme d'une partie du réservoir produite dans le moule ou du moule ou par analyse d'une pièce perdue fabriquée sans polymère de collage.

6. Procédé selon l'une quelconque des revendications 1 à 5, où le polymère de collage est déposé dans les zones concaves de l'insert.

7. Procédé selon l'une quelconque des revendications 1 à 5, où le polymère de collage est un polymère à base de polyéthylène.

8. Procédé selon l'une quelconque des revendications 1 à 6, où le polymère de surmoulage (2) est un polymère thermoplastique.

9. Procédé selon l'une quelconque des revendications 1 à 7, où l'armature en fibres comprend des fibres de verre ou de carbone et où la matrice thermodurcissable est une résine époxy.

10. Réservoir pour gaz sous pression, tel de l'hydrogène, réalisé par le procédé selon l'une quelconque des revendications précédentes.

11. Réservoir pour gaz sous pression, tel de l'hydrogène, comprenant un insert (1) en composite, comprenant une armature en fibres noyée dans une matrice thermodurcissable, et un surmoulage couvrant au moins une partie de la surface de l'insert par un polymère de surmoulage (2), ***caractérisé en ce qu'au*** moins une partie de la surface de l'insert (1) comporte un dépôt d'un polymère de collage.
